Europäisches Patentamt

European Patent Office

Office européen des brevets

(19)

(11) Publication number : **0 466 465 A1**

## (12) EUROPEAN PATENT APPLICATION

(21) Application number : **91306236.0**

(22) Date of filing : **09.07.91**

(51) Int. Cl.⁵ : **F23R 3/48, F16B 21/18**

(30) Priority : **10.07.90 US 550564**

(43) Date of publication of application :
**15.01.92 Bulletin 92/03**

(84) Designated Contracting States :
**CH DE FR GB IT LI NL SE**

(71) Applicant : **GENERAL ELECTRIC COMPANY**
**1 River Road**
**Schenectady, NY 12345 (US)**

(72) Inventor : **Ford, John Edward**
**59 Lincoln Avenue**
**Amsterdam, New York 12010 (US)**
Inventor : **Myers, Albert (NMN)**
**740 Hampshire Seat**
**Schenectady, New York 12309 (US)**

(74) Representative : **Pratt, Richard Wilson et al**
**London Patent Operation G.E. TECHNICAL**
**SERVICES CO. INC. Burdett House 15/16**
**Buckingham Street**
**London WC2N 6DU (GB)**

(54) **Tube mounting apparatus including a wire retainer.**

(57) A mounting assembly for use with crossfire tubes connected between plural combustors arranged in a spaced relation about a turbine, wherein the assembly includes a wire retainer 6 formed to connect a crossfire tube end 1 to the retainer 6 by compressive side loading of the tube 1 and further formed to connect the tube 1 to a mounting base 3 by compressive forces in a different direction between the base 3 and the retainer wire 6.

FIG. 2

EP 0 466 465 A1

## BACKGROUND AND SUMMARY OF THE INVENTION

The invention relates to mounting apparatus including wire retainers for use with crossfire or crossover ignition tubes commonly found in combustion systems for gas turbines and the like. The exemplary retainer embodiment disclosed is of a shape to cooperate with a mounting base in the vicinity of a crossfire tube end and when in place results in locking the mounting base and crossfire tube to the retainer by way of compressive forces.

The use of adjacent combustors in a gas turbine with interconnecting crossfire tubes is generally well known as indicated in a commonly assigned U.S. Patent to White No. 4,249,372 issued February 10, 1981. As indicated therein, a typical cross ignition assembly comprises tubular members extending between aligned openings in adjacent combustors that are held in place by means which position the opposite ends of the tubular members or crossfire tubes in fluid communication with the adjacent combustion chambers. The purpose of the crossfire tubes is that of providing for the ignition of fuel in one combustor chamber from ignited fuel in an adjacent combustor without providing igniter means in each combustor. Such crossfire tubes also serve the purpose of equalizing to some extent the pressures between combustion chambers. As indicated in the White patent, it is important that such crossfire tubes be mounted so that the tube ends are positioned accurately as well as being mounted in a manner to reduce vibration which has been found to cause wear in the cross ignition assembly. The objects of the White invention are accomplished in part through the use of a leaf spring for retaining the outer end of each crossfire tubular member in its operative position by effecting a cantilever support for each tube end.

Briefly summarized, we have discovered that the exemplary embodiment of our wire retainer which can be easily formed with resilient wire or rod of standard size and composition will provide firm support against axial movement of the crossfire tube through the use of compressive side loading provided by the wire retainer. Additionally, the retainer is firmly attached to the mounting base by an additional compressive force caused by the manner in which the retainer is formed and the manner in which it is engaged by the mounting base on both sides of the crossfire tube. Additionally, the illustrative embodiment of our new wire retainer only requires a base in the vicinity of the crossfire tube and does not require a base extended to the full length of the retainer.

## BRIEF DESCRIPTION OF THE DRAWINGS

These as well as other objects and advantages of this invention will be more clearly appreciated by carefully studying the following detailed description of a presently preferred exemplary embodiment of this invention in conjunction with the accompanying drawings in which:

FIGURE 1 is a partial sectional view and a partially broken away view of a generalized cross ignition assembly illustrating a wire retainer connecting a crossfire tube to a mounting base and a combustion liner of a combustion chamber;

FIGURE 2 is a partial bottom view of the cross ignition assembly of Figure 1 illustrating further connection details between the wire retainer and the mounting base as well as the connection of the retainer to the crossfire tube;

FIGURE 3 is a partial side view of the elements of Figure 2;

FIGURE 4 is a plan view of the wire retainer; and

FIGURE 5 is a side view of Figure 4 illustrating further details of the retainer.

## DETAILED DESCRIPTION OF THE DRAWINGS

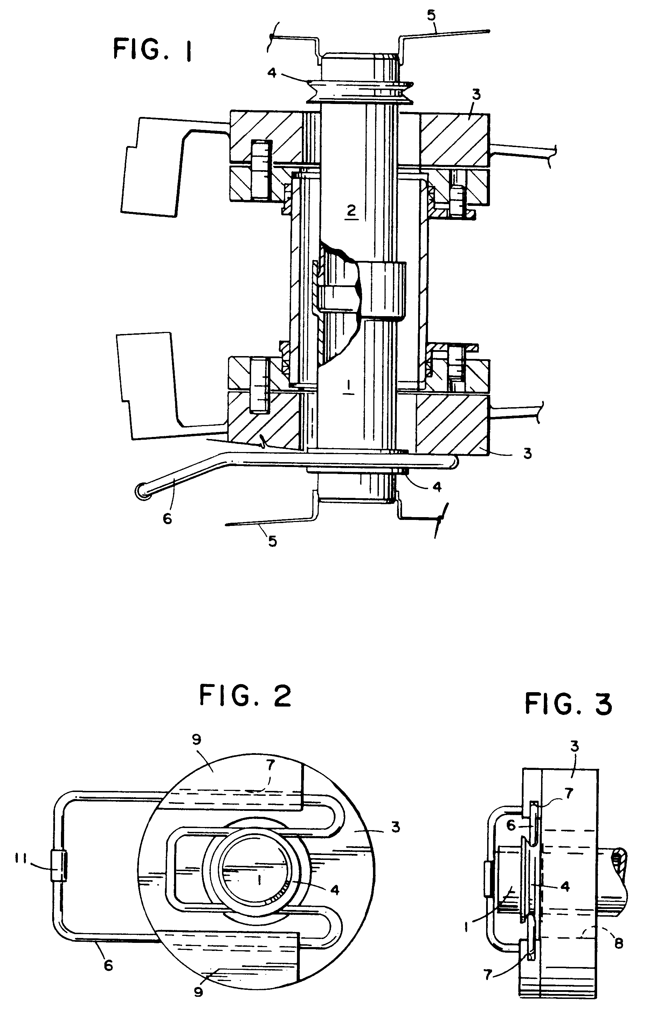

Typically a crossfire tube may comprise a unitary tubular member extending between aligned openings in adjacent combustors or may take the more conventional form illustrated in Figure 1 wherein a pair of coaxial telescoping crossfire tube members 1 and 2 each has an outer end disposed in an annular opening of a combustor element such as combustion liner 5. The ends are held in place by a mounting arrangement including a base element 3, a wire retainer 6 and a collar 4 which is fixed to each of the crossfire tube members.

One of the mounting arrangements for positioning an end of a crossfire tube at a combustion chamber is illustrated in Figures 2 and 3. The mounting base 3 which is attached to the combustor by flange means or the like (not illustrated in Figures 2 and 3) includes a bore 8 for receiving the end of a crossfire tube member and its associated collar 4. The base additionally includes slots 7 formed in the raised portions 9 of the mounting base. The highest dimension of the slots 7 is approximately equal to the diameter of the wire used in retainer member 6 so as to closely receive the retainer as well as compressing the retainer on both sides by the mounting base slot height, as will be subsequently explained.

As illustrated in Figure 3, collar 4 is fixed to crossfire tube member 1 for example at an appropriate distance such that the tube end will extend into the combustor at a proper distance for forming a connection but without extending too far into the combustion gas flow paths thus avoiding damage to the crossfire tubes in the form of end burning. Collar 4 includes a V-shaped groove for receiving the wire retainer 6 as the open end of the retainer slides into the V-grooves on the side of the crossfire tube.

As will be appreciated by those skilled in the art, the mounting arrangement illustrated in Figures 2 and 3 may be assembled or disassembled by hand, would require no special installation tools, and would cause the crossfire tube to be centered with respect to the retainer.

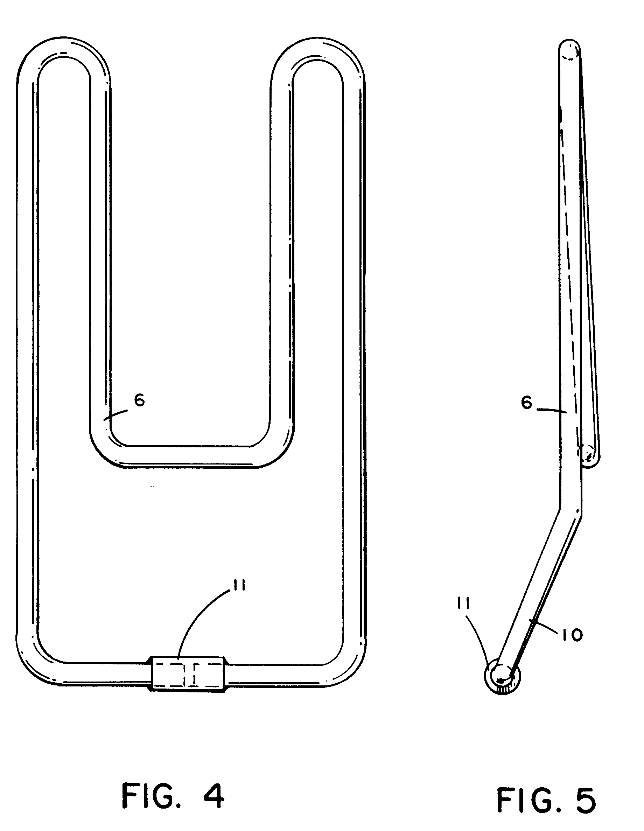

Further advantages of the mounting arrangement may be realized from a consideration of the wire retainer as illustrated in Figures 4 and 5, for example. The retainer illustrated therein may in an exemplary embodiment be made of resilient wire or rod of conventional size (0.3125 inch diameter) and material (X-750 wire) and is easily producible in the shape illustrated in Figure 4 through the inclusion of six bends, which form the retainer into the illustrated compact shape. Two additional bends are required to obtain the features illustrated in Figure 5. Although the ends of the wire are shown in the drawings joined by a coupling device 11, they can also be joined by butt welding, for example.

Again referring to Figure 4, the linear distance between the inner legs forming the open end or central opening of the retainer is made to be slightly smaller than the inner diameter of the V-shaped groove of the crossfire tube collar illustrated in Figure 3, such that when the retainer is fully engaged, the compressive side loading of the wire retainer controls the radial and axial movement of the crossfire tube.

The side view shown in Figure 5 illustrates that the inner and outer legs of the wire retainer are not coplanar, but are offset in the manner shown by a distance which is approximately equal to the thickness of the wire. When the retainer is fully engaged with the crossfire tube and mounting base, as previously mentioned, the bottom of the retainer is compressed or flattened on both sides by the mounting base slot height and the radial surface of the base element. Such compression results in locking the wire retainer rather firmly to the mounting base. Since the compressive side loading of the wire retainer on the tube collar 4 tends to control the radial and axial movement of the crossfire tube and the retainer is locked to the base, the end result is a crossfire tube locked in all directions when using a retainer of the disclosed design.

Stated differently, the shape of our retainer was chosen to create two independent forces wherein the first force produced by the side loading of the wire on the collar is a centering force holding the crossfire tube to the retainer. The second force resulting from the chosen shape wherein the inner and outer legs of the retainer are not copolanar creates a compressive force when the retainer is engaged which will hold the retainer and the captured tube to the mounting base.

As further illustrated in Figure 4 and in particular Figure 5, the raised portion 10 of the retainer forms a convenient handle for use when installing and removing the retainer. Such handle structure is useful because although the combined effect of the aforementioned forces is sufficiently great as to prevent the parts from becoming loose during operation of the combustors, the forces act in different directions and their combined effect is small enough for the crossfire tube retainer to be installed or removed by hand, thus requiring no special installation tools. Additionally, those skilled in the pertinent art will note that since the forces are not required to act over the full length of the retainer wire, but in fact act in a relatively compact area, the retainer of our disclosed design requires a base only in the vicinity of the crossfire tube and, therefore, requires a base which is relatively small in comparison to prior art cantilevered or plate retainers.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. Apparatus for mounting an end of a tube in a fluid opening of a combustion system comprising:

   a mounting base including a central bore and a first connection device located on a radial surface thereof, said base being disposed about said system opening;

   a tube disposed in said bore, said tube having a second connection device fixedly disposed adjacent an outer end;

   a retainer including inner elements forming a central opening for receiving and engaging said second connection device of said tube with a first compressive force;

   said retainer further including outer elements for engaging said first connection device with a second compressive force;

   said first and second compressive forces acting in different directions so as to resist movement of said tube in a radial or an axial direction with respect to said mounting base.

2. The mounting apparatus of claim 1 wherein the first connection device on said mounting base includes slots for slidably receiving and engaging said outer elements of the retainer.

3. The mounting apparatus of claim 1 wherein said second connection device of said tube is a collar fixed to the tube,

   said collar including a groove formed therein for receiving and engaging said inner elements of the retainer.

4. The mounting apparatus of claim 3 wherein said first compressive force is directed radially inwardly on the collar groove by the inner elements of said retainer.

5. The mounting apparatus of claim 1 wherein said retainer outer elements are parallel legs spaced apart to engage said first connection device and said inner and outer elements are oriented in different planes.

6. The mounting apparatus of claim 1 wherein said second connection device is a collar fixed to said tube, and

said collar includes a groove formed therein for receiving and engaging said inner elements of the retainer.

7. An improved mounting arrangement for a crossfire tube assembly wherein adjacent combustion chambers are connected by a tube element with an end passing through a mounting base on each said chamber, the improvement comprising:

a collar with a groove formed therein fixedly attached to said tube adjacent the tube end and said base;

a connector formed on a radial surface of said base;

a resilient wire retainer bent to form two parallel inner coplanar legs spaced to form a central opening for receiving and compressively engaging the groove in said collar;

said wire retainer further bent to form two parallel outer coplanar legs connected to said inner legs but laying in a different plane,

said retainer legs being compressively engaged between said base connector and said radial surface;

whereby the compressive forces formed between the retainer and the base and the retainer and the collar are applied in different directions so as to resist movement of said tube in a radial or in an axial direction with respect to said mounting base.

8. The improved mounting arrangement as in claim 7 wherein said base connector includes two parallel slots for slidably receiving and engaging said outer legs of said wire retainer.

9. The improved mounting arrangement of claim 8 wherein the resilient wire retainer is further bent into a closed loop and includes an upturned handle portion for engaging and disengaging said retainer by hand.

10. The improved mounting arrangement of claim 7 wherein the compressive force exerted by said retainer inner legs on the groove in said collar are directed radially inwardly of said tube, and

the force generated by the compressive engagement of the retainer and said base is directed substantially orthogonally to the direction of said first mentioned force.

FIG. 1

FIG. 2

FIG. 3

FIG. 4

FIG. 5

EP 0 466 465 A1

**European Patent Office**

**EUROPEAN SEARCH REPORT**

Application Number

EP 91 30 6236

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,D | US-A-4 249 372 (WHITE) | 1-6 | F23R3/48 |
| A | * the whole document * | 7,8,10 | F16B21/18 |
| | --- | | |
| Y | GB-A-658 407 (CLEVELAND STEEL PRODUCTS CO.) * page 3, left column, line 10 - line 62; figures 2-5 * | 1-6 | |
| | --- | | |
| A | GB-A-1 165 120 (GRA-TEC INC.) * the whole document * | 1-10 | |
| | --- | | |
| A | US-A-2 845 291 (PRIESTMAN) * the whole document * | 1,7 | |
| | --- | | |
| A | US-A-2 832 195 (WEISSBORN) * the whole document * | 1,7 | |
| | ----- | | |

**TECHNICAL FIELDS SEARCHED (Int. Cl.5 )**

F23R
F16B

The present search report has been drawn up for all claims

| Place of search | Date of completion of the search | Examiner |
|---|---|---|
| THE HAGUE | 17 OCTOBER 1991 | SERRANO GALARRAGA J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)